# EUROPEAN PATENT APPLICATION

(11) **EP 2 105 820 A1**
(43) Date of publication of application: **30.09.2009**
(21) Application number: 08016782.8
(22) Date of filing: 24.09.2008
(51) Int. Cl.: G06F 1/18

(54) **Active computer casing**

(30) Priority: 28.03.2008 TW 97205378 U
(71) Applicant: Lee, Cheng-Ping, Taipei County 235 (TW)
(72) Inventor: Lee, Cheng-Ping, Taipei County 235 (TW)
(74) Representative: Becker Kurig Straus

(57) **Abstract**

An active computer casing includes a first casing and a second casing. The first casing defines a first void therein and forms at least a first sliding portion. At least a first through hole is defined in at least one side of the first casing and communicates with the first void. The second casing is receivable in the first void, and defines a second void therein. At least a second through hole is defined in at least a side of the second casing and communicates with the first through hole. The second casing forms at least a second sliding portion for corresponding to the first sliding portions. The second sliding portions slide along the first sliding portions and in respect to the first void. The second casing can be received in the first void, reducing the size of the computer casing thereby expediting carrying and storage.

## Description

### BACKGROUND OF THE INVENTION

### (a) Field of the Invention

The present invention relates to a computer casing, and in particular to an active computer casing which has changeable size for meeting the requirements of both carrying and storing operation and accommodating a computer host and associated computer components therein.

### (b) Description of the Prior Art

A conventional computer casing is typically used to accommodate a computer host and associated components therein. In general, a computer host and associated computer components are fixed in appropriate positions within the computer casing for the purpose of preventing the computer host against damage by external impact when it is working. Accordingly, the computer casing must be designed to be solid and encapsulated wholly. Moreover, the computer host ordinarily generates high temperature source when it is operating. When the heat originated from the computer host has higher temperature than its standard working temperature, the computer host will be out of work for the overheating, and even tends to be damaged. Thus the enclosed computer casing has to remain a certain space for heat dissipation devices, for example fans. In this way, the computer host can interchange cold air and heat with outside, and therefore expel heat to maintain normal working temperature. Because of these, the computer host must be encapsulated with a certain space therein.

In addition, the conventional computer casing would experience shipment, market, purchase of consumers, and even assembly. During the whole period, the computer casing is hollow for accommodating associated components therein, and occupies a certain space in the process of carrying, resulting in waste of fuels, and hindering from reduction of carrying cost especially at the age of high-price fuels.

Moreover, when the computer casing is idle, it still occupies limited space in a warehouse, correspondingly increasing storage cost and further troubling buyers' carrying.

The size of the computer casing is relatively fixed. When a consumer wants to upgrade the computer host and supplement peripherals, the computer casing has to be replaced with the one with larger size. Although the original computer casing may be not damaged, its disposal can not be avoided. It is obvious that the conventional computer casing can not match the computer host flexibly.

### SUMMARY OF THE INVENTION

An object of the present invention is to provide an active computer casing which has changeable size, thereby providing small size while carrying and storage and providing large size for accommodating a computer host and associated components.

The active computer casing of the present invention comprises a first casing and a second casing. The first casing defines a first void therein. At least a first through hole is defined in at least one side of the first casing and communicates with the first void. The first casing forms at least a first sliding portion. The second casing is receivable in the first void, and defines a second void therein. At least a second through hole is defined in at least a side of the second casing and communicates with the first through hole. The second casing forms at least a second sliding portion for corresponding to the first sliding portions. The second sliding portions slide along the first sliding portions such that the second casing is moveable with respect to the first void.

The second casing move to be accommodated in the first void, reducing the volume of the whole computer casing thereby facilitating carrying and storage. When a computer host and associated components need to be assembled, the second casing slides along the first sliding portions and moves away from the first void. The first void joins the second void to define an assembly space for accommodating the computer host and the associated components.

### BRIEF DESCRIPTION OF THE DRAWINGS

Fig. 1 is a perspective view of an active computer casing according to the present invention.
Fig. 2 is an exploded view of a second casing of the active computer casing of Fig. 1.
Fig. 3 is an exploded view of a first casing of the active computer casing of Fig. 1.
Fig. 4 is a partially cross-sectional view of the active computer casing.
Fig. 5 is an assembled view of the active computer casing of the present invention.
Fig. 6 is a partial view of the active computer casing, wherein the active computer casing is assembled fully.
Fig. 7 is a partial view of the active computer casing, wherein the active computer casing is sliding.

### DESCRIPTION OF THE PREFERRED EMBODIMENTS

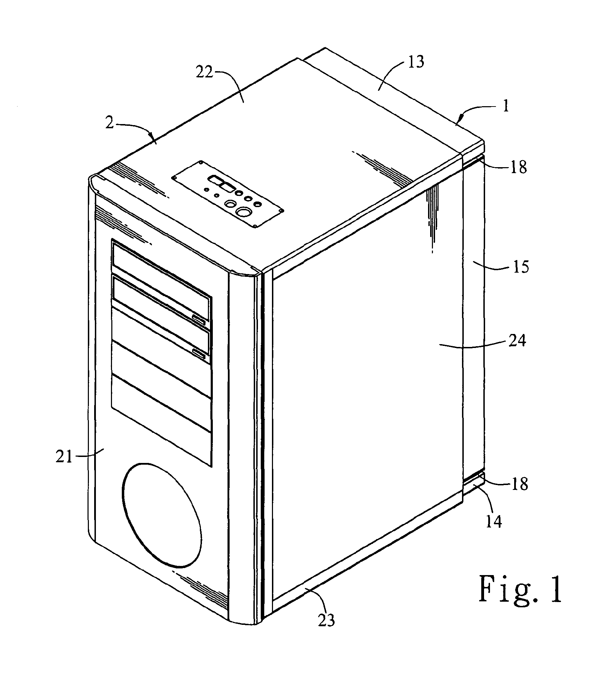

Referring to Figs. 1 to 3, an active computer casing in accordance with the present invention comprises a first casing 1 and a second casing 2.

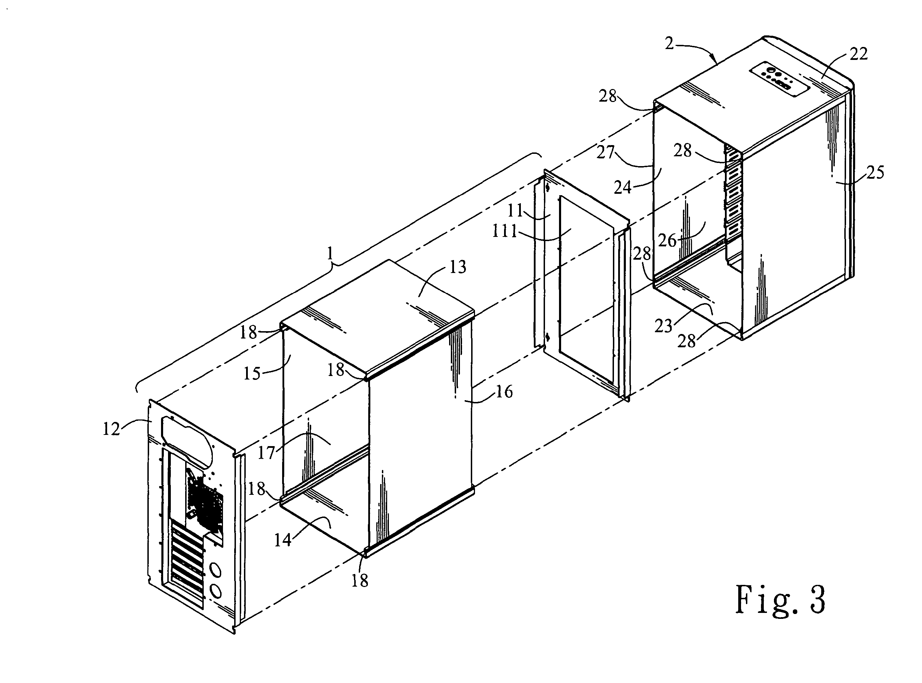

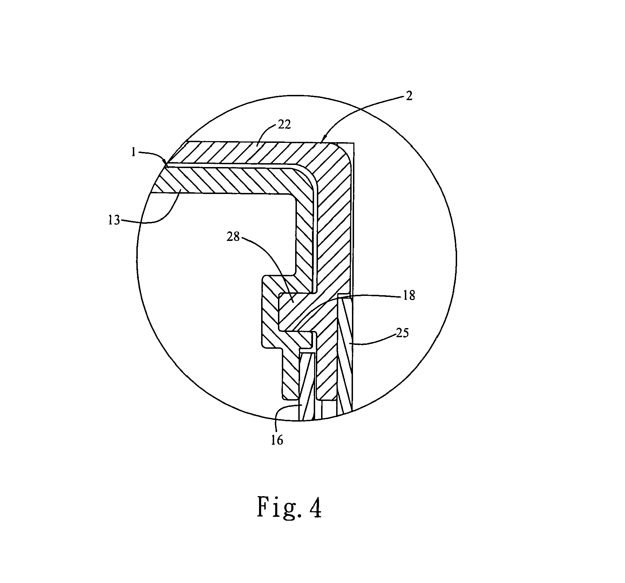

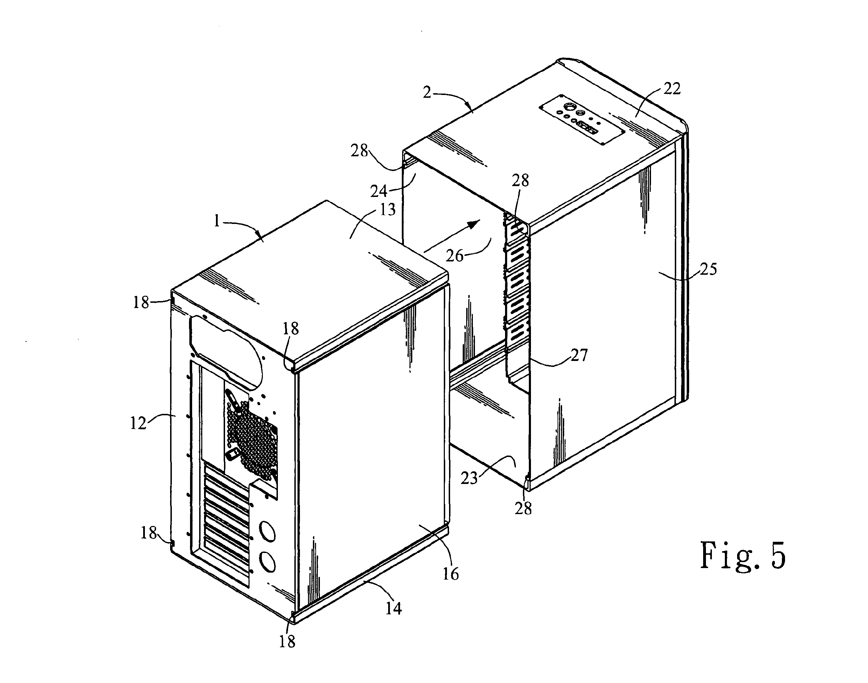

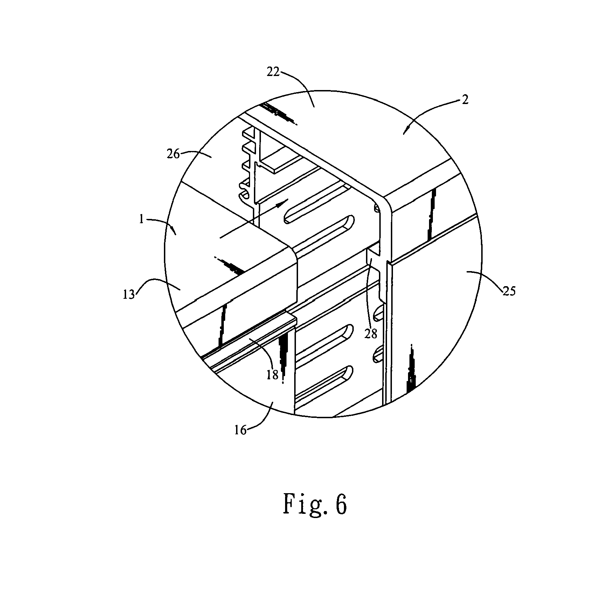

Referring to Figs. 3 to 6, the first casing 1 comprises a first front panel 11, a first rear panel 12, a first top panel 13, a first bottom panel 14, a first left panel 15 and a first right panel 16, which joint together to form a hexahedral closed casing. The first casing 1 defines a first void 17 therein. A first through hole 111 is defined in the first front panel 11 and communicates with the first void 17. In one embodiment, the first top panel 13 and the first bottom panel 14 respectively form first sliding portions 18 for corresponding to a top and a bottom of the first void 17. The first sliding portions 18 are inner rails.

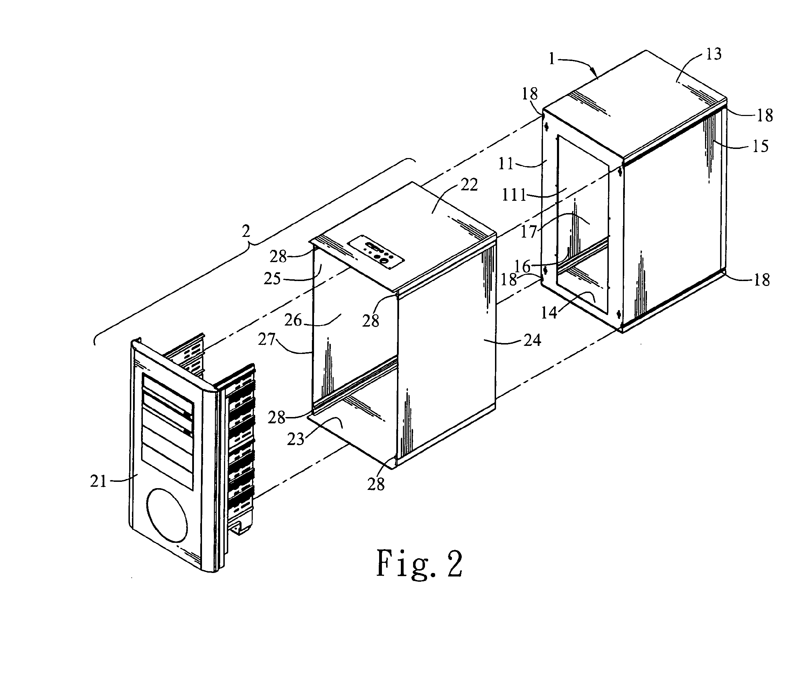

According to Figs. 2, 4, 5 and 6, the second casing 2 comprises a second front panel 21, a second top panel 22, a second bottom panel 23, a second left panel 24 and a second right panel 25, which joint together to form a pentahedral closed casing. The second casing 2 defines a second void 26 therein. A second through hole 27 is defined in a rear of the second casing 2 and communicates with the first through hole 111. In assembly the second casing 2 is receivable in the first void 17. The second top panel 22 and the second bottom panel 23 of the second casing 2 respectively form second sliding portions 28 for corresponding to the first sliding portions 18 of the first top panel 13 and the first bottom panel 14. In one embodiment, the second sliding portions 28 are outer rails corresponding to the inner rails.

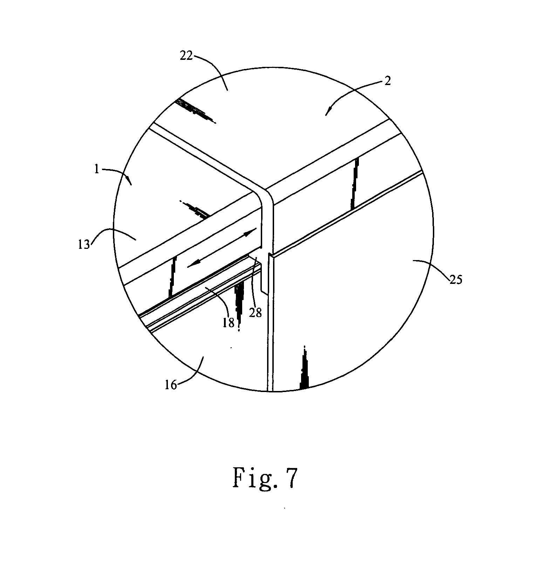

Further referring to Figs. 2-3 and 5-7, the first casing 1 and the second casing 2 are assembled together. The second sliding portions 28 slide along the first sliding portions 18 such that the second casing 2 moves with respect to the first void 17. The second casing 2 may move to be accommodated in the first void 17, thereby reducing the volume of the whole computer casing for facilitating carrying and storage. When a computer host and associated components want to be assembled, the second sliding portions 28 slide along the first sliding portions 18 such that the second casing 2 moves away from the first void 17. The first void 17 joins the second void 26 to define an assembly space for accommodating the computer host and the associated components.

The present invention has the following advantages:
1. The second sliding portions 28 slide along the first sliding portions 18. Accordingly, the second casing 2 moves with respect to the first void 17. The second casing 2 may move to be accommodated in the first void 17, thereby reducing the size of the whole computer casing. Carrying amount increases, and correspondingly, carrying cost and fuel fees decreases.
2. The entire computer casing of the present invention has shrinkable size, and thus can accommodate more products, improving storage efficiency and reducing total storage cost.
3. The size of the computer casing is variable depending on users' requirements. The present invention can assemble a desired computer host and associated components, and can shrink the computer casing for facilitating carrying.

It is understood that the invention may be embodied in other forms without departing from the spirit thereof. Thus, the present examples and embodiments are to be considered in all respects as illustrative and not restrictive, and the invention is not to be limited to the details given herein.

## Claims

1. An active computer casing comprising:
a first casing 1 defining a first void 17 therein, at least a first through hole 111 being defined in at least one side of the first casing 1 and communicating with the first void 17, the first casing 1 forming at least a first sliding portion 18; and
a second casing 2 being receivable in the first void 17, and defining a second void 26 therein, at least a second through hole 27 being defined in at least a side of the second casing 2 and communicating with the first through hole 111, the second casing 2 forming at least a second sliding portion 28 for corresponding to the first sliding portions 18;
wherein the second sliding portions 28 slide along the first sliding portions 18 such that the second casing 2 is moveable with respect to the first void 17.

2. The active computer casing as claimed in claim 1, wherein the first sliding portions 18 are defined in the first void 17, and wherein the second sliding portions 28 are defined in the second casing 2 for corresponding to the first sliding portions 18.

3. The active computer casing as claimed in claim 2, wherein the first sliding portions 18 are respectively formed on a top and a bottom of the first void 17, and wherein the second sliding portions 28 are respectively formed on a top and a bottom of the second casing 2.

4. The active computer casing as claimed in claim 1, wherein the first sliding portions 18 are inner rails, and wherein the second sliding portions 28 are outer rails for corresponding to the inner rails.

5. The active computer casing as claimed in claim 1, wherein the first casing 1 comprises a first front pane 11, a first rear panel 12, a first top panel 13, a first bottom panel 14, a first left panel 15 and a first right panel 16, which joint together to form a hexahedral closed casing, the first through hole 111 being defined in the first front panel 11.

6. The active computer casing as claimed in claim 1, wherein the second casing 2 comprises a second front panel 21, a second top panel 22, a second left panel 24 and a second right panel 25, which joint together to form a pentahedral closed casing, the second through hole 27 being defined in the a rear of the second casing 2.
